Europäisches Patentamt

European Patent Office

Office européen des brevets

(11) Veröffentlichungsnummer : **0 077 058
B1**

# (12) EUROPÄISCHE PATENTSCHRIFT

(45) Veröffentlichungstag der Patentschrift :
15.05.85

(21) Anmeldenummer : 82109367.1

(22) Anmeldetag : 09.10.82

(51) Int. Cl.⁴ : **F 16 K 27/06**

(54) **Kugelhahn.**

(30) Priorität : 13.10.81 DE 3140504

(43) Veröffentlichungstag der Anmeldung :
20.04.83 Patentblatt 83/16

(45) Bekanntmachung des Hinweises auf die Patenterteilung : 15.05.85 Patentblatt 85/20

(84) Benannte Vertragsstaaten :
AT DE FR GB IT SE

(56) Entgegenhaltungen :
DE-B- 2 235 557
DE-U- 7 910 913
US-A- 2 573 177

(73) Patentinhaber : **Klinger AG
Baarerstrasse 10
CH-6301 Zug (CH)**

(72) Erfinder : **Huber, Richard, Dipl.-Ing.
Fürstenstrasse 17b
A-2340 Mödling (AT)**
Erfinder : **Wirz, Peter
Im Juch 733
Unterkulm (Aargau) (CH)**

(74) Vertreter : **Dipl.-Ing. H. Marsch Dipl.-Ing. K. Sparing
Dipl.-Phys.Dr. W.H. Röhl Patentanwälte
Rethelstrasse 123
D-4000 Düsseldorf (DE)**

**Beschreibung**

Die Erfindung betrifft einen Kugelhahn mit einem Gehäuse, bestehend aus einem rohrförmigen Endabschnitt und einem gegenüber diesem erweiterten Mittelabschnitt, der durch einen konischen Zwischenabschnitt von mindestens 30° Konuswinkel mit dem Endabschnitt verbunden ist, und mit einer im Mittelabschnitt gelagerten, mittels eines Betätigungsbolzens von außen drehbaren, mittels mindestens eines Dichtungsringes abgedichteten Kugel, welcher Dichtungsring in einem gegen das Gehäuse abgestützten Stützteil angeordnet ist. Ein derartiger Kugelhahn ist in der DE-U1-79 10 913 beschrieben und dargestellt.

Der bekannte Kugelhahn ist asymmetrisch aufgebaut derart, daß das Gehäuse an einem Ende den rohrförmigen Endabschnitt, den daran anschließenden Zwischenabschnitt und schließlich den Mittelabschnitt in einstückiger Bauweise aufweist. Der Mittelabschnitt ist zunächst offen, so daß die Kugel und ein Dichtring eingesetzt werden können. Der Dichtring wird von einem Stützteil aus hartem Isolierstoff getragen, der bis zu einem Anschlag in den Mittelabschnitt eingeschoben wird. Danach wird über eine stirnseitige Fase des Stützteils die freie Kante des Mittelabschnitts einwärts gebördelt. In ein Lochgewinde des Stützteils kann dann ein mit Bolzengewinde versehenes Rohr eingeschraubt werden, das einen zweiten Endabschnitt bildet. Ein in eine Umfangsnut des Stützteils eingelegter Dichtungsring liegt an der inneren Mantelfläche des zylindrischen Mittelabschnitts an.

Die US-A-2 573 177 offenbart einen Kugelhahn mit einem zunächst zweiteiligen, in der Mittelebene der Kugel quer zur Rohrachsrichtung geteilten Gehäuse, in das je eine metallische wellrohrartige Dichtung eingelegt ist. Die Gehäusehälften werden dann bei eingelegter Kugel einander genähert, bis eine gewünschte Vorspannung der Dichtungen erreicht ist ; in dieser Position werden dann die Gehäusehälften aneinander fixiert, z. B. durch Verschweißen.

Schließlich offenbart die DE-B-22 35 557 einen Kugelhahn mit einem einstückig ungeschweißt durch spanlose Verformung hergestellten Gehäuse. In einen Rohling mit den Abmessungen des späteren Mittelabschnitts wird eine vormontierte Baugruppe aus der Kugel und zwei mit Dichtringen versehenen Stützteilen eingesetzt, wonach die freien Enden des Rohlings eingezogen werden, bis sie an den Stirnkanten der Stützteile anliegen. Danach werden diese abgedichtet mit dem Gehäuse verbunden, vorzugsweise durch eine innen im Umfang gelegte Schweißnaht.

Aufgabe der Erfindung ist es, ausgehend von dem eingangs definierten Stand der Technik, einen Kugelhahn zu schaffen, der, ähnlich wie in der zuletzt erörterten Druckschrift offenbart, ein einstückigungeschweißtes Gehäuse aufweist, aber auch sonst keine komplizierten, prüfungsbedürftigen Schweißnähte in den dem Mediendruck unterworfenen Bereichen besitzt.

Diese Aufgabe wird gemäß der Erfindung dadurch gelöst, daß

(a) das gesamte Gehäuse mit beidseits an den Mittelabschnitt über konische Zwischenabschnitte anschließenden Endabschnitten ungeschweißt einstückig ausgebildet ist,

(b) die Kugel zwischen zwei je in einem Stützteil angeordneten Dichtringen aufgenommen ist, und

(c) die Stützteile sich abgedichtet an den konischen Zwischenabschnitten abstützen.

Das kennzeichnende Merkmal (a) ist, wie bereits erwähnt, aus der gattungsfremden Druckschrift DE-B-22 35 557 bekannt. Das gilt auch für das zweite kennzeichnende Merkmal (b), das sich auch der oben erwähnten US-A-25 73 177 entnehmen läßt. Während aber die erstgenannte Druckschrift einen besonderen Arbeitsgang für die Festlegung und Abdichtung der Stützteile im Gehäuseinnern erfordert und die letztgenannte einen mit Justierarbeit verbundenen Montagevorgang zwingend erforderlich macht, ist es durch das kennzeichnende Merkmal (c) möglich, die Fertigung des Hahnes erheblich zu vereinfachen, wobei gleichfalls der Kraftfluß zwischen den konischen Zwischenabschnitten über die Stützteile und die Kugel unter entsprechender Vorspannung der jeweils zwischengeschalteten Dichtung verläuft. Bei Verwendung von Rohren mit großen Fertigungstoleranzen kann die Einhaltung der Vorspannung innerhalb gegebener Grenzwerte durch Ausgleichselemente sichergestellt werden ; in vielen Fällen ist dies jedoch nicht einmal erforderlich.

Da es aus wirtschaftlichen Gründen oftmals erforderlich ist, Rohre mit großen Wanddickentoleranzen zu verwenden, kann es zur Erzielung der richtigen Pressung zwischen Dichtungsringen und Kugel vorteilhaft sein, in den das Stützteil enthaltenden Kraftfluß, welcher die Kugel am konischen Zwischenabschnitt stützt, einen vorzugsweise vor allem plastisch verformbaren Toleranzaufnehmer einzuschalten, der leichter verformbar als der Dichtungsring, aber unter betriebsmäßiger Belastung durch die Kugel praktisch unverformbar ist. Dieser Toleranzaufnehmer ist dann je nach Wanddicke bei der Außenverformung der Gehäuseendabschnitte mehr oder weniger stark axial verformt, unter der betriebsmäßigen Belastung durch die Kugel wirkt er jedoch als praktisch starrer Körper.

Es sei erwähnt, daß elastische Unterstützungen von Dichtelementen für Kugelhähne allgemein bekannt sind, doch sind diese ihrer Federcharakteristik nach nur geeignet, den Verschleiß des Dichtungsmaterials oder durch Verformung des Gehäuses bedingte Verspannungen auszugleichen ; größere Abstände können aber nicht überbrückt werden, weil dann die elastische Unterstützung zu schwach ist, die betriebsmäßige Belastung der Kugel ohne unzulässige Axialverschiebung aufzunehmen.

Durch geeignete Ausbildung kann der Stützteil selbst in einem Abschnitt als verformbarer Toleranzaufnehmer ausgebildet sein, es ist aber auch möglich, den Toleranzaufnehmer als gesonderten Teil in den Kraftfluß zwischen Kugel und konischem Gehäusezwischenabschnitt einzuschalten, vorteilhaft als axiale Unterstützung des mit dem im Umfang am Stützteil abgedichteten Dichtungsringes. Diese axiale Unterstützung kann ein Ring aus Kunststoff sein, dessen Verformbarkeit größer als jene des Materials für den Dichtungsring ist. Dabei ist aber zu beachten, daß eine völlige Kammerung des Kunststoffringes seine Verformung völlig behindern kann.

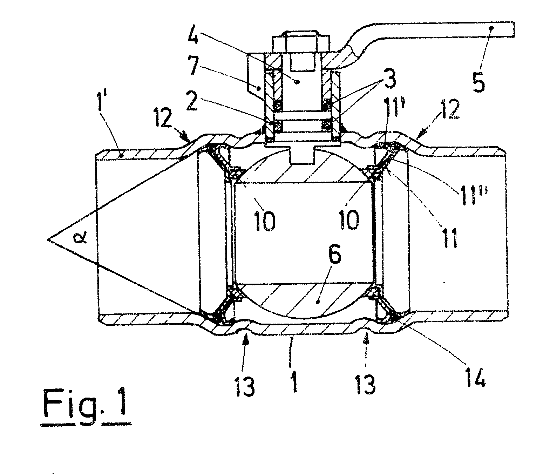

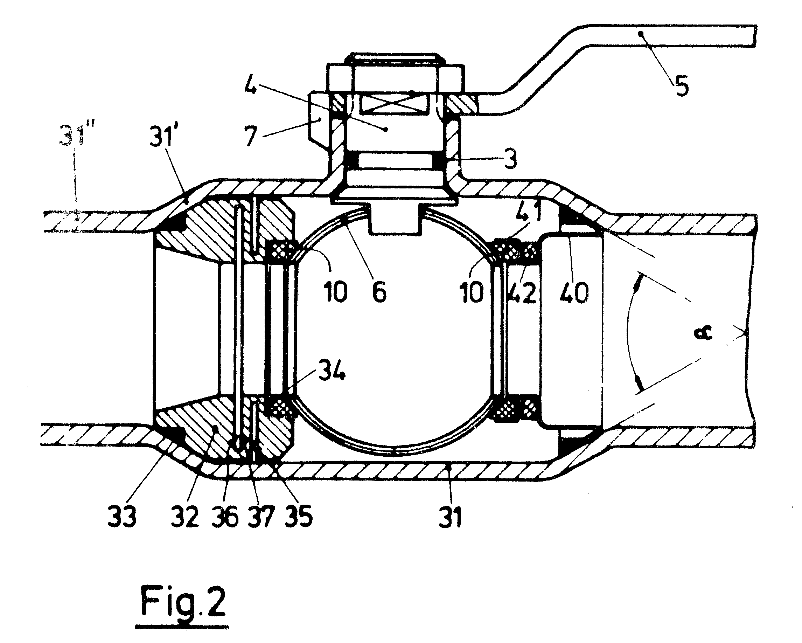

Die Erfindung wird nun anhand der in den beigefügten Fig. 1 und 2, die zwei Kugelhähne nach der Erfindung im Axialschnitt zeigen, näher erläutert.

Der in Fig. 1 dargestellte Kugelhahn weist ein aus Rohr hergestelltes Gehäuse 1 auf. In einem mit diesem verschweißten Rohrstück 2 ist ein über O-Ringe 3 nach außen abgedichteter Bewegungsbolzen 4 gelagert, der an seinem Außenende einen Handgriff 5 trägt und mit seinem im Gehäuse liegenden Ende in die das Schaltglied bildende Kugel 6 eingreift, so daß diese durch den Handgriff 5 verdreht werden kann, wobei ein Anschlag 7 die Drehbewegung auf 90° begrenzt.

Die Kugel 6 ist zwischen Dichtungsringen 10 drehbar gelagert, die über aus Blech geformte Stützteile 11 mit dem Innenumfang des Gehäuserohres 1 in Verbindung stehen. Diese Stützteile 11 bestehen aus zwei benachbart angeordneten scheibenförmigen Blechformteilen 11', 11". Am Innenrand sind diese so ausgebildet, daß sie gemeinsam die Aufnahme für den Dichtungsring 10 bilden ; am Außenrand weisen sie zylindrische, am Rohrgehäuse 1 anliegende Randabschnitte auf, die voneinander weg weisen. Diese Randabschnitte stützen sich in axialer Richtung an nach innen weisenden Verformungen des Rohrgehäuses 1 ab. Der dargestellte Kugelhahn weist eingezogene zylindrische Gehäuseendabschnitte 1' auf, die im Vergleich zum Mittelstück des Gehäuses 1, das den ursprünglichen Rohrdurchmesser hat, einen kleineren Durchmesser aufweisen, was durch nachträgliche plastische Verformung des zylindrischen Rohres erzielt wurde. Die konischen Zwischenabschnitte 12 zwischen den Gehäuseendabschnitten 1' dienen als Abstützung der nach außen weisenden Randabschnitte der äußeren scheibenförmigen Blechformteile 11", wogegen die zur Hahnmitte gerichteten Randabschnitte der inneren scheibenförmigen Blechformteile 11' sich an in Umfangsrichtung verlaufenden Einsickungen 13 abstützen. Dabei ist es auch vorteilhaft, wenn die Randabschnitte eine geringe Konizität aufweisen, so daß sie mit Vorspannung am Innenumfang des Gehäuses 1 anliegen. Im Bereich der Übergänge zwischen den konischen Abschnitten der Blechformteile 11', 11" zu den Randabschnitten ist ein O-Ring 14 angeordnet, der auch am Innenumfang des Rohrgehäuses 1 anliegt, so daß die beiden Blechformteile 11', 11" und das Gehäuse 1 gegeneinander abgedichtet sind. Die beiden den Stützteil 11 zur Aufnahme der Dichtungsringe 10 bildenden scheibenförmigen Blechformteile 11', 11" können durch Punktschweißung zu einem Stück verbunden werden, wobei der O-Ring 14 über die Randabschnitte vorsteht und daher beim Einführen in das Rohrgehäuse 1 am Innenumfang des Gehäuses 1 schleift ; es ist aber auch möglich, die beiden scheibenförmigen Blechformteile 11', 11" getrennt in den Kugelhahn einzusetzen, so daß der O-Ring 14, ohne sich besonders am Gehäuse 1 zu reiben, eingeführt werden kann.

Zur Herstellung des Kugelhahns kann entweder zuerst an einer Seite der zylindrische Gehäuseendabschnitt 1' hergestellt werden, dann aufeinanderfolgend ein Stützteil 11, die Kugel 6 und der andere Stützteil 11 eingeführt und in ihrer richtigen Stellung im Gehäuse 1 fixiert werden, worauf dann die anderen Verformungen des Rohrgehäuses 1 vorgenommen werden. Es ist aber auch möglich, in das unverformte Rohr die Innenteile 10, 11, 6 einzusetzen und dann erst sämtliche Verformungen des Rohres gleichzeitig durchzuführen. Ein Konuswinkel $\alpha$ von 50° gewährleistet dabei, daß der Axialabstand zwischen den Innenflächen der Zwischenabschnitte 12 infolge der Rohrtoleranzen nicht unzulässig variiert. Bei der Fixierung der Innenteile 10, 11, 6 des Kugelhahnes an der richtigen Gehäusestelle kann vor der Gehäuseverformung auch durch eine Spannvorrichtung dafür gesorgt werden, daß die Stützteile 11 an ihrem Außenumfang so weit gegeneinander bewegt werden, daß sich die Blechformteile 11', 11" im konisch verlaufenden Abschnitt verformen und mit Vorspannung an den Dichtungsringen 10 anliegen. Eine solche elastische Verspannung ist vor allem bei größeren Betriebsdrücken erforderlich, damit auch nach einigem Verschleiß der Dichtungsringe 10 die Pressung der Kugel 6 noch ausreicht. Die dargestellte Bauweise ermöglicht bei einem Kugelhahn mit einstückigem rohrförmigen Gehäuse 1 eine schweißtechnisch einfache Bauweise, die eine sichere Funktion gewährleistet.

Der aus Fig. 2 entnehmbare Kugelhahn weist ein aus einem Rohr hergestelltes Gehäuse 31 auf, bei dem auch die Führung für den Bewegungsbolzen 4 vom Rohr selbst ausgeformt ist. Das Gehäuse 31 weist somit keine Schweißnaht auf. Die durch Formgebung an der Außenwand des Rohres gebildeten konischen Zwischenabschnitte 31', die dann in die zylindrischen Gehäuseendabschnitte 31" übergehen, weisen einen Konuswinkel $\alpha$ von 60° auf. Bei Verwendung eines Rohres mit normalen Rohrtoleranzen kann bei einem Kugeldurchlaß von 40 mm der Axialabstand zwischen den Innenwänden der konischen Zwischenabschnitte 31' etwa 1,5 mm variieren, und der steile Konuswinkel reicht in einem solchen Fall ohne zusätzliche Maßnahmen nicht aus, die Pressung zwischen Kugel 6 und Dichtungsringen 10 in zulässigen Grenzen zu halten.

In der linken Hälfte von Fig. 2 sind gedrehte Stützteile 32 dargestellt, die sich mit einer konischen Fläche an der Innenwand des Zwischenabschnittes 31' abstützen, wobei ein O-Ring 33 zur Abdichtung vorgesehen ist. Am anderen Ende ist am Stützteil 32 der Dichtungsring 10 zur Abdichtung gegen die Kugel 6 angeordnet, der am Außenumfang dichtend in den Stützteil 32 eingesetzt ist. Zwischen Stützteil 32 und Dichtungsring 10 ist ein tellerfederartiger Führungsteil 34 eingeschaltet, der auch dazu dient, den Verschleiß des Dichtungsringes 10 nach längerer Betriebsdauer auszugleichen oder Verspannungen auszugleichen, die durch Verformung des Gehäuses 31 infolge äußerer Kräfte oder thermischer Ursachen entstehen. Der Stützteil 32 weist im Bereich zwischen den beiden an den Enden vorgesehenen Dichtungen von außen bzw. von innen je eine Ringnut 35, 36 auf, die einen axial verformbaren Toleranzaufnehmer bilden.

Der in Fig. 2 dargestellte Kugelhahn zeigt ein Gehäuse 31 mit einem durch die Toleranzen bedingten größten Axialabstand zwischen den konischen Innenwänden der Zwischenabschnitte 31'. Der Toleranzaufnehmer ist somit unverformt und die Ringnuten 35, 36 im Stützteil 32 weisen parallele Wände auf. Für den Fall, daß sich toleranzbedingt bei der Herstellung ein kleinerer Axialabstand zwischen den konischen Innenwänden ergibt, würde der Stützteil 32 dadurch axial verkürzt werden, daß sich die Wand 37 zwischen den Ringnuten 35, 36 konisch formt ; dabei verflacht sich der radiale Abschnitt des Führungsteiles 34. Der Verformungswiderstand dieses Toleranzaufnehmers im Stützteil 32 muß dabei so groß sein, daß zwar während der Gehäuseherstellung eine Verformung ohne Beschädigung des Dichtungsringes 10 möglich ist, aber im Schließzustand unter Betriebsdruck die ungelagerte Kugel 6 sicher ohne weitere axiale Verschiebung abgestützt wird. Auf diese Weise können also die bei äußerer Verformung des Rohres durch die Dickentoleranz bedingten Axialabstände zwischen den konischen Innenwänden ausgeglichen werden, ohne daß die Stützteile 32 nach dem Formgebungsvorgang für das Rohr mit diesem fest verbunden werden müssen.

Die rechte Seite zeigt die Ausführung eines Stützteiles 40 in Form eines Blechformteiles, der den Dichtungsring 10 am Innenmantel dichtend aufnimmt. Der Stützteil 40 hat zwar in axialer Richtung eine geringe Eigenelastizität, kann aber nicht die infrage stehenden großen Toleranzen aufnehmen. Dafür ist zwischen einem Führungsteil 41 und dem Stützteil 40 ein Kunststoffring 42 vorgesehen, der in der dargestellten Situation (größter Axialabstand) unverformt ist. Bei größerer Rohrdicke wird bei der Verformung des Rohres der Stützteil 40 (unter Verflachung des Führungsteiles 41) näher zur Kugel 6 bewegt, wobei sich der als Toleranzaufnehmer ausgebildete Kunststoffring 42 unter Abnahme seiner Dicke plastisch nach innen verformt. Beispielsweise kann der Kunststoffring 42 aus Polytetrafluoräthylen (PTFE), der Dichtungsring 10 dagegen aus glasfaserverstärktem PTFE ausgebildet sein. Da die Druckfestigkeit von glasfaserverstärktem PTFE etwa doppelt so groß wie von einfachem PTFE ist, wird bei der toleranzbedingten Verschiebung des Stützteiles 40 gegen die Kugel 6 hin der PTFE-Ring 42 und nicht der Dichtungsring 10 verformt. Die Ausbildung des als Toleranzaufnehmer ausgebildeten Kunststoffringes 42 aus gummielastischem Material wäre in den meisten Fällen eine ungünstigere Lösung. Abgesehen davon, daß fast alle gummielastischen Materialien eine niedrigere Temperaturfestigkeit haben als PTFE, müßte der Toleranzaufnehmer bedeutend länger ausgebildet werden, damit für die infrage stehenden Verformungswege die über den Dichtungsring 10 auf die Kugel 6 wirkenden Kräfte etwa gleich groß gehalten werden können. Gegebenenfalls müßte auch ein aus elastischem Kunststoff bestehender Toleranzaufnehmer zum Teil innen geführt sein. Ähnliches gilt für einen aus einer metallischen Feder auszubildenden Toleranzaufnehmer, weil dieser ebenfalls aus den oben dargelegten Gründen länger ausgebildet sein müßte als ein vor allem plastisch verformbarer Toleranzaufnehmer.

**Patentansprüche**

1. Kugelhahn mit einem Gehäuse, bestehend aus einem rohrförmigen Endabschnitt (1', 31") und einem gegenüber diesem erweiterten Mittelabschnitt (1, 31), der durch einen konischen Zwischenabschnitt (12, 31') von mindestens 30° Konuswinkel mit dem Endabschnitt verbunden ist, und mit einer im Mittelabschnitt gelagerten, mittels eines Betätigungsbolzens (4) von außen drehbaren, mittels mindestens eines Dichtungsringes (10) abgedichteten Kugel (6), welcher Dichtungsring in einem gegen das Gehäuse abgestützten Stützteil (11, 32, 42) angeordnet ist, dadurch gekennzeichnet,

(a) daß das gesamte Gehäuse (1, 12, 1' ; 31, 31', 31") mit beidseits an den Mittelabschnitt über konische Zwischenabschnitte anschließenden Endabschnitten ungeschweißt einstückig ausgebildet ist,

(b) daß die Kugel (6) zwischen zwei je in einem Stützteil (11, 32, 42) angeordneten Dichtringen (10) aufgenommen ist, und

(c) daß die Stützteile sich abgedichtet an den konischen Zwischenabschnitten (12, 31') abstützen.

2. Kugelhahn nach Anspruch 1, dadurch gekennzeichnet, daß in den das Stützteil (32 ; 40) enthaltenden Kraftfluß, welcher die Kugel (6) am konischen Zwischenabschnitt (12, 31') abstützt, ein vorzugsweise plastisch verformbarer Toleranzaufnehmer (35, 36 ; 42) eingeschaltet ist, der leichter verformbar als der Dichtungsring (10), aber unter betriebsmäßiger Belastung durch die Kugel (6) praktisch unverformbar ist.

3. Kugelhahn nach Anspruch 2, dadurch gekennzeichnet, daß das Stützteil (32) selbst in einem Abschnitt als verformbarer Toleranzaufnehmer ausgebildet ist.

4. Kugelhahn nach Anspruch 2, dadurch gekennzeichnet, daß der Toleranzaufnehmer (42) als axiale Unterstützung des mit dem Umfang am Stützteil (40) abgedichteten Dichtungsringes (10) ausgebildet ist.

5. Kugelhahn nach Anspruch 4, dadurch gekennzeichnet, daß der Toleranzaufnehmer (42) ein Ring aus Kunststoff ist, dessen Verformbarkeit größer als jene des Materials für den Dichtungsring (10) ist.

## Claims

1. Ball valve having a housing, comprising a tubular end section (1', 31") and a central section (1, 31) which is broader than the end section and is connected to the end section by way of a conical intermediate section (12, 31') which has a cone angle of at least 30°, and having a ball (6) which is mounted in the central section, is rotatable from outside by means of an operating bolt (4) and is sealed by means of at least one sealing ring (10) arranged in a support component (11, 32, 42) which is supported against the housing, characterised in that

(a) the entire housing (1, 12, 1' ; 31, 31', 31") with end sections adjoining either side of the central section by way of conical intermediate sections is constructed in one piece without welding ;

(b) the ball (6) is accommodated between two sealing rings (10) each of which is arranged in a support component (11, 32, 42), and

(c) the support components are supported against the conical intermediate sections (12, 31') in such a manner that they are sealed.

2. Ball valve according to claim 1, characterised in that there is inserted in the line of force containing the support component (32 ; 40) and supporting the ball (6) against the conical intermediate section (12, 31') a preferably plastically deformable tolerance absorber (35, 36 ; 42) which is more readily deformable than is the sealing ring (10) but which is virtually undeformable by the ball (6) under operating stress.

3. Ball tap according to claim 2, characterised in that the support component (32) itself is constructed in one section as a deformable tolerance absorber.

4. Ball tap according to claim 2, characterised in that the tolerance absorber (42) is constructed as an axial support for the sealing ring (10) the periphery of which seals against the support component (40).

5. Ball tap according to claim 4, characterised in that the tolerance absorber (42) is a ring made of plastics material, the deformability of which is greater than that of the material for the sealing ring (10).

## Revendications

1. Robinet à boisseau sphérique ayant un corps constitué d'une partie extrême tubulaire (1', 31") et d'une partie médiane (1, 31) élargie par rapport à elle et réunie à elle par une partie intermédiaire conique (12, 31') dont l'angle au sommet du cône est d'au moins 30°, et un boisseau sphérique (6) monté dans la partie médiane, pouvant être tourné de l'extérieur au moyen d'une tige de manœuvre (4) et vis-à-vis duquel l'étanchéité est réalisée au moyen d'au moins un joint annulaire (10) placé dans un élément de support (11, 32, 42) appuyé contre le corps, caractérisé par le fait que :

(a) l'ensemble du corps (1, 12, 1' ; 31, 31', 32") est fait d'une seule pièce sans soudage avec des parties extrêmes réunies à la partie médiane par des parties intermédiaires coniques ;

(b) le boisseau sphérique (6) est logé entre deux joints annulaires d'étanchéité (10) placés chacun dans un élément de support (11, 32, 42), et

(c) les éléments de support s'appuient de façon étanche sur les parties intermédiaires coniques (12, 31').

2. Robinet à boisseau sphérique selon la revendication 1, caractérisé par le fait que dans le flux de forces qui contient l'élément de support (32 ; 40) et appuie le boisseau sphérique (6) sur la partie intermédiaire conique (12, 31') est placé un capteur de tolérances (35, 36 ; 42) de préférence déformable plastiquement qui est plus facilement déformable que le joint d'étanchéité (10), mais est pratiquement indéformable sous la charge de service produite par le boisseau (6).

3. Robinet à boisseau sphérique selon la revendication 2, caractérisé par le fait que l'élément de support (32) lui-même forme dans une partie un capteur de tolérances déformable.

4. Robinet à boisseau sphérique selon la revendication 2, caractérisé par le fait que le capteur de tolérances (42) forme un appui axial pour le joint d'étanchéité (10), qui assure l'étanchéité par son pourtour vis-à-vis de l'élément de support (40).

5. Robinet à boisseau sphérique selon la revendication 4, caractérisé par le fait que le capteur de tolérances (42) est un anneau en matière plastique dont la déformabilité est plus grande que celle de la matière du joint d'étanchéité (10).

Fig. 1

Fig.2